# EUROPÄISCHE PATENTANMELDUNG

(11) **EP 2 378 342 A1**
(43) Veröffentlichungstag der Anmeldung: **19.10.2011**
(21) Anmeldenummer: 10160011.2
(22) Anmeldetag: 15.04.2010
(51) Int. Cl.: G02B 21/32, A61M 5/32, C12M 3/00, G01N 1/04

(54) **Mikromanipulationssystem mit Schutzvorrichtung für Kapillaren**

(71) Anmelder: MMI AG, 8152 Glattbrugg (CH)
(72) Erfinder: Tschanz, Peter, 8500 Gerlikon (CH)
(74) Vertreter: Siegert, Georg

(57) **Zusammenfassung**

Ein Manipulationssystem für Mikroskopanwendungen umfasst ein Mikromanipulationswerkzeug (1) und eine das Werkzeug schützende Schutzvorrichtung (2), wobei das Werkzeug (1) und die Schutzvorrichtung (2) relativ zueinander zwischen einer das Werkzeug kontaktlos schützenden Position und einer das Werkzeug zur Manipulation freigebenden Position bewegbar sind.

## Beschreibung

Die vorliegende Erfindung betrifft ein Manipulationssystem für Mikroskopanwendungen, insbesondere ein Manipulationssystem mit einer Schutzvorrichtung für bei der Mikromanipulation von biologischem Material eingesetzte Kapillaren.

### Stand der Technik

Die molekulare Analyse reiner angereicherter Zellkulturen oder sogar einzelner Zellen ist eine wichtige Voraussetzung der medizinischen Genomik und Proteomik, und könnte in Zukunft für eine medizinische Profilierung von Patienten wesentliche Bedeutung erlangen. Bisher war dieses Ziel aufgrund maschineller sowie verfahrenstechnischer Beschränkungen bei der Zellmanipulation (z.B. der Zellsammlung oder der Mikroinjektion) nur schwer und mit nicht unerheblichem Zeitaufwand zu erreichen. Insbesondere die zur genotypischen und phänotypischen Charakterisierung notwendige Isolierung einzelner sowie seltener Zellen aus winzigen Proben stellte sich sehr schwierig dar, da einzelne Zellen vom Forschungspersonal unter einem Mikroskop erfasst und die erfasste Zelle dann manuell mithilfe von Kapillaren manipuliert werden musste. Hierzu ist es notwendig, in den Kapillaren ein genau definiertes Fluidvolumen zu bewegen, beispielsweise um einzelne Zellen oder Zellinhalte über die Kapillare zu entnehmen oder in eine Zelle Bestandteile anderer Zellen (zum Beispiel Zellkerne) zu injizieren, ohne dabei die Zelle durch zu viel abgesaugtes oder injiziertes Material zu beschädigen.

Außerdem müssen je nach Art der Zellen (zum Beispiel der Größe des zu sammelnden Materials) unterschiedliche Manipulationswerkzeuge wie zum Beispiel Kapillaren eingesetzt werden und dementsprechend ein Wechsel der Kapillaren vorgenommen werden. Selbst bei Verwendung einer Art von Kapillare, muss diese in regelmäßigen Abständen gereinigt und daher ebenfalls aus dem Mikromanipulationssystem entnommen werden. Schließlich kann es auch notwendig werden, während der Zellmanipulation freien Zugang zur biologischen Probe zu erhalten, wofür das Manipulationswerkzeug aus dem Arbeitsbereich entfernt werden muss.

All diese Vorgänge bergen jedoch die Gefahr in sich, dass das Mikromanipulationswerkzeug bei seiner Verlagerung beschädigt wird oder der Anwender durch das Werkzeug verletzt wird. Insbesondere zerbrechliche Kapillaren sind als Manipulationswerkzeuge dabei gefährdet.

Im Stand der Technik sind bisher Mikromanipulationssysteme bekannt, bei denen das Manipulationswerkzeug zum Wechseln ausgeschraubt werden kann, jedoch ansonsten ungeschützt ist. Hierbei besteht ein allgemeines Problem darin, dass nach dem Einbau des Werkzeugs das Mikromanipulationssystem wieder neu kalibriert bzw. eingemessen werden muss. Aus der EP 0 292 899 A1 ist ein Verfahren zur Mikroinjektion in Zellen bzw. zum Absaugen auf einzelnen Zellteilen oder ganzer Zellenverbände bekannt, bei dem die Kapillare in einem schwenkbaren Kapillarenhalter fixiert ist und eine axiale Bewegung der Kapillare zum Anstechen der Zellen vorgesehen ist. Weder bei der Bewegung aus dem Arbeitsbereich hinaus, noch bei einem eventuellen Kapillarenwechsel sind die Kapillare bzw. der Anwender geschützt. Aus der EP 0 229 204 A1 ist eine Kanülenschutzkappe bekannt, die jeweils einer nicht dichtenden und einer dichtenden Position auf dem Nadelansatzstück entsprechende Rastnuten aufweist, in die das Nadelansatzstück mit einer Ausstülpung eingerastet werden kann. Aus der EP 0 434 008 A1 ist eine ähnliche Schutzvorrichtung, diesmal für eine Injektionsnadel, bekannt, die auf die Injektionsnadel aufgeschoben wird, wobei sich die Nadel in einer Bohrung der Schutzvorrichtung verhaken und die Schutzvorrichtung dadurch fixieren soll. Bei beiden Schutzkappen besteht das Problem darin, dass eine mechanische Belastung auf die Kanüle bzw. die Injektionsnadel ausgeübt wird, die bei Molekularwerkzeugen wie zum Beispiel Kapillaren zu deren Bruch führen würde und somit für derartige Zwecke nicht eingesetzt werden kann.

### Darstellung der Erfindung

Es ist somit Aufgabe der vorliegenden Erfindung, ein Mikromanipulationssystem zu entwickeln, dessen Manipulationswerkzeug aus seinem Arbeitsbereich bewegt werden kann und dabei vor Beschädigung oder Zerstörung geschützt ist und gleichzeitig eine Gefährdung des Anwenders ausgeschlossen wird. Auch sollte das Manipulationswerkzeug wieder möglichst genau in seine Arbeitsposition zurückgebracht werden können. Diese Aufgabe wird mithilfe eines Manipulationssystems für Mikroskopanwendungen mit den Merkmalen des folgenden Anspruchs 1 gelöst. Bevorzugte Ausführungsformen des Manipulationssystems für Mikroskopanwendungen sind in den Unteransprüchen definiert.

Gemäß der vorliegenden Erfindung wird somit ein Manipulationssystem für Mikroskopanwendungen bereitgestellt, welches ein Mikromanipulationswerkzeug und eine das Werkzeug schützende Schutzvorrichtung umfasst, wobei das Werkzeug und die Schutzvorrichtung relativ zueinander zwischen einer das Werkzeug kontaktlos schützenden Position und einer das Werkzeug zur Manipulation freigebenden Position bewegbar sind. Dadurch kann einerseits ein einfacherer Kapillarenwechsel durchgeführt werden, und andererseits sowohl das Werkzeug vor Beschädigungen bewahrt, als auch der Anwender vor Verletzungen geschützt werden. Die Schutzvorrichtung berührt in der schützenden Position das Werkzeug nicht, was insbesondere für sehr empfindliche Mikromanipulationswerkzeuge wie Kapillaren von wesentlicher Bedeutung ist.

Die Manipulationsvorrichtung ist dabei bevorzugt an einem das Werkzeug aufnehmenden Werkzeughalter angebracht. Dadurch kann die Schutzvorrichtung sehr nahe am Werkzeug vorgesehen werden und somit zuverlässig und schnell vor der das Werkzeug zur Manipulation freigebenden Position in die das Werkzeug kontaktlos schützende Position bewegt werden.

Dabei ist es vorteilhaft, dass das Werkzeug mit einem Klemmglied, dessen Durchmesser größer als jener des Werkzeugs ist, am Werkzeughalter fixiert ist und der Innendurchmesser der Schutzvorrichtung im Wesentlichen gleich oder größer als der Durchmesser des Klemmglieds ist. Auf diese Weise kann die Kontaktlosigkeit in der schützenden Position auf einfache Weise sichergestellt werden, da stets ausreichend Sicherheitsraum zwischen dem Werkzeug und der Innenwand der Schutzvorrichtung verbleibt.

Bevorzugt ist dabei, dass das Werkzeug mit einem Klemmglied am Werkzeughalter fixiert ist und die Schutzvorrichtung am Klemmglied einrastbar ist. Dies kann umgesetzt werden, indem die Schutzvorrichtung einen zur äußeren Oberfläche des Klemmglieds komplementär (passend) ausgebildeten Abschnitt aufweist. Besonders bevorzugt weist hierbei die äußere Oberfläche des Klemmglieds mutter-artige Abflachungen mit einer Schlüsselweite auf, wobei ein Bereich der Schutzvorrichtung dieser Schlüsselweite entsprechend ausgebildet ist. Auf diese Weise kann das Werkzeug schnell und einfach vom Halter gelöst werden, wobei der mit der entsprechenden Schlüsselweite versehene Bereich der Schutzvorrichtung am distalen oder proximalen Ende angeordnet sein kann, um das Werkzeug bei aufgeschobener bzw. zurückgezogener Schutzvorrichtung entfernen zu können.

In einer bevorzugten Ausführung der vorliegenden Erfindung ist die Schutzvorrichtung auf der Längsachse des Werkzeugs kontaktlos über das Werkzeug schiebbar. Auf diese Weise ist es auf einfache und schnelle Weise möglich, das Werkzeug in der Schutzhülse aufzunehmen und das Werkzeug vor Beschädigung und Anwender vor Verletzung zu schützen. Auch wird dadurch der Bauraum des Manipulationssystems praktisch nicht verändert.

Hierbei ist bevorzugt, dass die Schutzhülse eine in Achsrichtung des Werkzeugs hintere Wandung mit einer Öffnung aufweist, über welche die Schutzvorrichtung auf der Längsachse des Werkzeugs, insbesondere entlang des Werkzeughalters geführt wird. Dadurch wird in jedem Stadium der Bewegung der Schutzvorrichtung relativ zum Werkzeug sichergestellt, dass keine Berührung zwischen Werkzeug und Schutzvorrichtung auftreten kann und somit das Werkzeug effektiv auch während der Bewegung geschützt bleibt.

Gemäß einer anderen Ausführungsform der vorliegenden Erfindung ist die Schutzvorrichtung eine kontaktlos über das Werkzeug klappbare Schutzhülse. Hierbei ist die Klappbewegung eine Bewegung im Wesentlichen senkrecht zum Werkzeug, das heißt die Schutzhülse wird nicht im Wesentlichen axial in Bezug auf das Werkzeug sondern senkrecht zu seiner Längsachse bewegt. Durch diese Ausführung kann bei Entfernung des Werkzeugs aus dem Arbeitsbereich ein effektiver Schutz des Werkzeugs mit wenig Aufwand sichergestellt werden, da beispielsweise die Schutzvorrichtung entsprechend der Bewegung des Werkzeugs auch im Zuge des Nachrüstens im Mikromanipulationssystem eingebaut werden kann. Diese Lösung ist insbesondere sehr kostengünstig durchzuführen.

Bevorzugt ist dabei die Schutzvorrichtung über eine horizontale Kippachse am Werkzeughalter angebracht. Diese Lösung erlaubt, ebenso wie die Lösung mit der verschiebbaren Schutzvorrichtung, ein besonders schnelles Überstülpen der Schutzvorrichtung über das Werkzeug und somit bei Bedarf fast sofortigen Schutz.

In einer weiteren bevorzugten Ausführungsform ist dabei die Schutzvorrichtung an einem Tragarm um eine horizontale Achse drehbar angebracht und ist durch Bewegen des Tragarms über das Werkzeug überstülpbar. Diese Ausführungsform ist insbesondere für Situationen geeignet, in denen an der Werkzeughalterung selbst keine Schutzvorrichtungen angebracht werden können, und stellt dabei einen zuverlässigen und kostengünstigen Schutz für das Werkzeug sowie den Anwender bereit. Auch ist durch die strukturelle Trennung der Schutzvorrichtung vom Werkzeug bzw. von der Werkzeughaltertang eine von der Werkzetagverstellung unabhängige Bewegung der Schutzvorrichtung möglich, so dass sich die Schutzvorrichtung bei Nichtgebrauch (das heißt bei Einsatz des Werkzeugs) außerhalb des Arbeitsbereichs des Mikroskops befindet und somit die Probenmanipulation nicht beeinträchtigen kann.

In einer besonders bevorzugten Ausführungsform umfasst das Manipulationssystem der Erfindung weiter einen um eine horizontale Rotationsachse schwenkbaren Schwenkarm, an dessen von der Rotationsachse entferntem Ende eine entlang dreier orthogonaler Arbeitsachsen bewegliche Werkzeugverstellung vorgesehen ist, an der das Werkzeug um eine zur Rotationsachse parallele Werkzeugachse schwenkbar angebracht ist. Die Vorteile dieser Ausführungen sind insbesondere, dass das Werkzeug mithilfe einer Schwenkbewegung zusammen mit den Arbeitsachsen aus dem Arbeitsbereich entfernt werden kann, wobei durch die Ausführung mit paralleler horizontaler Rotationsachse und Werkzeugachse das Werkzeug bei der Schwenkbewegung von der Probe abhebt und in einem flachen Bogen über die Arbeitsfläche wegbewegt wird. Es wäre auch denkbar, dass hierbei eine Koordinierung der Schwenkbewegung des Schwenkarms sowie der Rotation des Werkzeugs um die Werkzeugachse vorgenommen wird, um die flache bogenförmige Trajektorie des Werkzeugs zu optimieren. Durch das hiermit mögliche Wegkippen bzw. Schwenken wird der Arbeitsbereich für andere Bearbeitungsschritte oder -werkzeuge freigegeben und gleichzeitig das Verletzungsrisiko für den Anwender verringert. Des Weiteren ist es möglich, die vertikale und rotationale Bewegung des Werkzeugs so zu koordinieren, dass das ausgekippte bzw. ausgeschwenkte Werkzeug kopfüber angeordnet ist, was die Handhabung von Flüssigkeiten erleichtert. Gleichzeitig kann aufgrund der Beibehaltung der Ausrichtung der Werkzeugverstellung das Manipulationswerkzeug wieder in den Ausgangszustand über der Probe zurückgebracht werden, wodurch ein erneutes Einmessen bzw. Kalibrieren minimiert werden kann. Dies trägt nicht unwesentlich zur Bedienerfreundlichkeit bei.

In einer alternativen bevorzugten Ausführungsform umfasst das Manipulationssystem weiter eine entlang dreier orthogonaler Arbeitsachsen bewegliche Werkzeugverstellung, an deren einem Ende ein Schwenkarm um eine horizontale Rotationsachse schwenkbar gelagert ist, an dessen von der Rotationsachse entferntem Ende das Werkzeug um eine zur Rotationsachse parallele Werkzeugachse schwenkbar angebracht ist. Bei dieser Ausführungsform ist von Vorteil, dass zum Entfernen des Werkzeugs aus dem Arbeitsbereich lediglich der Schwenkarm um die horizontale Rotationsachse verschwenkt werden muss, die Werkzeugverstellung aber dabei nicht bewegt wird. Auch hier ist es wiederum durch Koordination der Schwenkbewegung des Schwenkarms und der Drehung des Werkzeugs um seine Werkzeugachse möglich, eine sehr flache bogenförmige Bewegung über die Arbeitsfläche hinweg zu erhalten.

Dabei ist es bevorzugt, dass die Schutzvorrichtung relativ zur Werkzeugverstellung bzw. zur Rotationsachse des Schwenkarms ortsfest angeordnet ist. Dadurch wird es möglich, beim Ausschwenken des Schwenkarms das Werkzeug direkt in die Schutzvorrichtung hinein zu kippen, so dass der Arbeitsbereich auf einfache Weise freigegeben werden kann.

In einer vorteilhaften Ausführungsform ist die Werkzeugverstellung mit den Arbeitsachsen hängend angeordnet. Im Regelfall befinden sich die Linearachsen auf bzw. über dem Mikroskoptisch, da unterhalb des Mikroskoptisches kein Bauraum für die Linearachsen vorhanden ist. Zur Bewegung des Tisches in x-Richtung wird somit seitlich zusätzlich Platz benötigt. Durch die über der Probe hängende Anordnung kann die Arbeitsfreiheit über dem Arbeitsbereich vergrößert werden und eine nahezu horizontale Bewegung (entlang eines sehr flachen Bogens) des Werkzeugs in und aus dem Arbeitsbereich erreicht werden.

Schließlich ist es von Vorteil, dass die Schutzvorrichtung manuell oder automatisch bewegbar ist, wobei sie hierzu entweder mithilfe eines mechanischen, eines hydraulischen oder eines pneumatischen Antriebs, oder einer Kombination dieser Antriebe, bewegbar ist. Es können somit Wartungsabläufe bzw. Werkzeugtauschvorgänge auch voll automatisiert und ohne Eingriff des Anwenders durchgeführt werden.

Die vorliegende Erfindung ermöglicht es somit, nicht nur beim Kapillarenwechsel, der Montage oder der Wartung ein schnelleres und effizienteres Arbeiten zu ermöglichen, sondern bietet auch eine Vergrößerung des Arbeitsraums aufgrund der flachen Werkzeugführung, eine Verringerung des Gewichts sowie des Bauraums, eine Erhöhung der Zuverlässigkeit aufgrund der einfachen Struktur des Manipulationssystems und somit eine Verringerung der damit verbundenen Kosten. Dies alles wird gekrönt durch eine erhebliche Erhöhung der Sicherheit des Systems, die eine Beschädigung des Mikromanipulationswerkzeugs effektiv verhindert und die Verletzungsgefahr des Anwenders drastisch verringert.

### Kurze Beschreibung der Zeichnungen

Figur 1 ist eine schematische Schnittansicht eines Manipulationssystems für Mikroskopanwendungen, bei dem das Manipulationswerkzeug in die Schutzvorrichtung eingeklappt werden kann;
Figur 2 ist eine zur Figur 1 alternative Ausführungsform, bei der die Schutzvorrichtung auf der Werkzeughalterung verschiebbar angeordnet ist;
Figur 3 zeigt eine weitere Ausführungsform des Manipulationssystems, bei der die Schutzvorrichtung auf einer das Werkzeug an der Halterung fixierenden Klemmmutter einrastbar ist, wobei links in der Figur ein Schnitt entlang der Linie A-A dargestellt ist;
Figur 4 zeigt eine schematische Ansicht einer Ausführungsform des Mikromanipulationssystems der vorliegenden Erfindung, bei der das Manipulationswerkzeug zusammen mit seinem Verstellantrieb in bzw. aus dem Arbeitsbereich schwenkbar ist;
Figur 5 zeigt eine alternativ bevorzugte Ausführungsform des Mikromanipulationssystems, bei der im Vergleich zu Figur 4 nur das Werkzeug aus dem Arbeitsbereich verschwenkt wird, die Werkzeugverstellung jedoch ortsfest bleibt;
Figur 6 ist eine Ausführungsform des erfindungsgemäßen Manipulationssystems, in der die Schutzvorrichtung auf das Werkzeug aufgeschwenkt wird; und
Figur 7 ist eine schematische Ansicht einer weiteren Ausführungsform der vorliegenden Erfindung, bei der die Schutzvorrichtung über eine Kippachse an der Werkzeughalterung befestigt ist.

### Wege zur Ausführung der Erfindung

Im Folgenden werden bevorzugte Ausführungsformen der vorliegenden Erfindung unter Bezugnahme auf die Zeichnungen beschrieben. Zunächst wird zum besseren Verständnis des Einsatzgebiets der Erfindung die automatisierte Isolierung beliebiger einzelner oder seltener Zellen beschrieben, welche in drei Schritten abläuft: Zellerkennung; Zellsammlung und Zellabgabe.

Die Erfinder haben zu diesem Zweck ein System bereitgestellt, das auf einem inversen Mikroskop (Umkehrmikroskop), einer Zellerkennungseinheit, einer automatisierten Kapillarverstellung, einer automatisierten Pumpe und einem Verschiebetisch basiert. Die Sammlung und Abgabe werden mithilfe einer hochpräzisen Pumpe gesteuert, die es erlaubt, Verfahrensabläufe festzulegen, die Nanoliter-Volumen eines Pumpmediums für den Abtrennvorgang der Zelle einsetzen und so die Grundlage schaffen für eine am Verfahrensende durchzuführende molekulare Analyse des Zellmaterials in lediglich 1 Microliter Medium.

Die (nicht haftenden) Zellen erfahren dabei keinerlei mechanische Belastungen: die Zellsammlung erfolgt lediglich aufgrund des die Zelle umgebenden Flüssigkeitsflusses. Unter optimalen Bedingungen können selbst teilweise anhaftende Zellen auf diese Weise gesammelt werden. Es besteht kein Kontakt zwischen den Zellen und der zur Sammlung eingesetzten Kapillare. Der Kapillardurchmesser kann wesentlich größer sein als jener der Zelle. Zum Beispiel können Zellen mit 6 µm Durchmesser effizient mit einer Kapillare von 40 µm Durchmesser gesammelt werden.

Die Abgabe der Zellen kann auf verschiedene Zielträger (deposits) erfolgen. Sogenannte "Grid deposits" sind dabei entweder raster-artige Punktablagen (wie zum Beispiel AmpliGrid^{®}) oder raster-artig angeordnete kleine Behälter (wie die IBIDI Probentaschen-Objektträger). Einzelpunktablagen können aus einem transparenten Deckel, einem PCR-Röhrchen oder einer Mikrofluid-Vorrichtung bestehen. Wie auch immer der Zielträger beschaffen ist, seine Größe sollte im Allgemeinen nicht die Größe von Standard-Objektträgern überschreiten, damit diese in die Mehrfachhalterung der Objektträger auf dem Verschiebetisch eingesetzt werden können.

Die Sammlung und Abgabe der Zellen kann auf verschiedene Arten erfolgen: von der manuellen bis zur voll automatisierten Betriebsart mit Zellerkennung. Jedoch ist es selbst bei der manuellen Betriebsart nicht notwendig, irgendeine Komponente des Systems (Mikroskop, Pumpe, Kapillare) von Hand zu bedienen: alle Betriebsvorgänge werden durch den Benutzer vom PC aus gestartet.

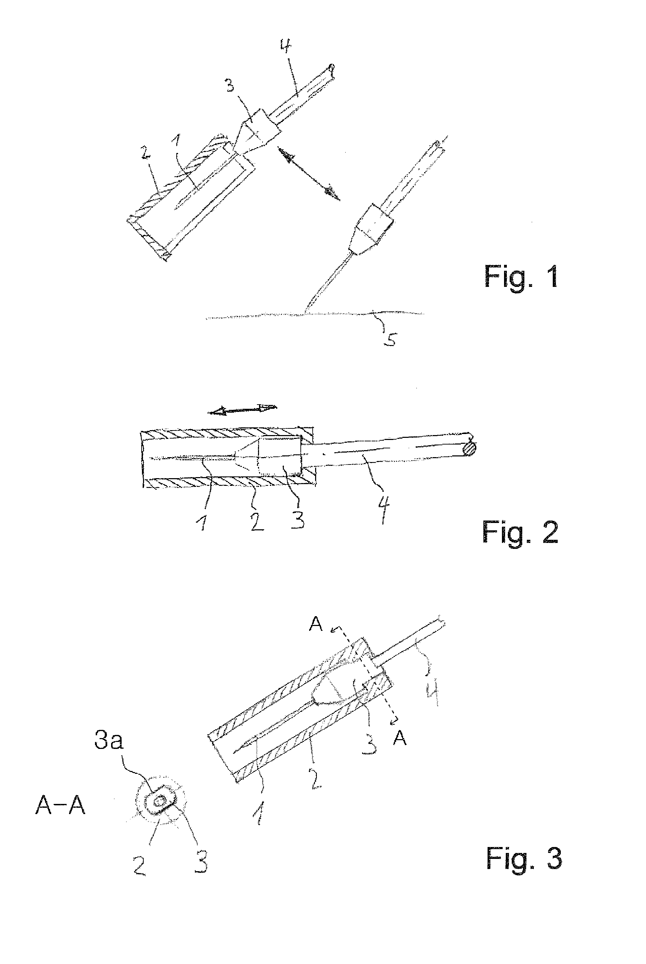

Im Folgenden werden Ausführungsbeispiele des erfindungsgemäßen Manipulationssystems anhand der Figuren beschrieben. In Figur 1 ist zunächst allgemein eine Kapillare 1 als Mikromanipulationswerkzeug dargestellt, welches mithilfe einer Klemmmutter 3 als Klemmglied an einem ein entsprechendes Schraubengewinde aufweisenden Halter 4 befestigt ist. Alternativ kann das Klemmglied anstatt durch die Klemmmutter 3 auch durch eine nicht gezeigte Klemmhülse mit Fixierschraube realisiert werden, wobei dann der Halter nicht mit einem Gewinde versehen sein muss. Der Halter ist an einem weiter nicht dargestellten drei- oder mehrachsigen Verschiebevorrichtung befestigt, mithilfe derer die Kapillare über die Probe bewegt und zur Manipulation abgesenkt werden kann, so dass die Spitze der Kapillare in einer Arbeitsebene 5 liegt. Typische Kapillarendurchmesser bewegen sich im Bereich von 100 µm oder weniger (zum Beispiel Kapillaren mit einem Durchmesser von 40 µm zur Aufnahme einzelner Zellen der Größenordnung unter 10 µm), und sind somit gegenüber Beschädigungen sehr empfindlich. Gleichzeitig können die aus Glas bestehenden Kapillaren bei unachtsamer Handhabung den Anwender verletzen. Aus diesem Grund kann, wie in Figur 1 durch den Pfeil angegeben ist, die Kapillare aus der Arbeitsebene, in der die Manipulation freigegeben ist, in eine Schutzposition bewegt werden, in der die Kapillare 1 durch einen hülsenartigen Schutz 2 vor Beschädigung und Gefährdung des Anwenders geschützt ist. Dabei kommt der hülsenartige Schutz 2 mit der Kapillare 1 nicht in Kontakt.

In Figur 2 ist eine alternative Gestaltung des Manipulationssystems der Erfindung dargestellt, bei der eine Schutzhülse 2 auf der Längsachse des Werkzeugs verschiebbar am Werkzeughalter 4 angebracht ist. Die Hülse 2 ist dabei zur Seite der Kapillarenspitze offen und besitzt in der gegenüber liegenden Endwand eine Öffnung, die den Kapillarenhalter 4 so umschließt, dass dieser die Hülse sicher in axialer Richtung führt. Der Innendurchmesser der Hülse 2 kann dabei so gewählt werden, dass er geringfügig größer als der Außendurchmesser der die Kapillare 1 im Halter 4 fixierenden Klemmmutter 3 ist, so dass zwischen ihnen eine die axiale Verschiebung zulassende Passung vorhanden ist. Im Gebrauch kann somit die Schutzhülse 2 auf einfache und schnelle Weise auf die Kapillare 1 geschoben werden (kontaktlos schützende Position) bzw. von der Kapillare 1 zurückgezogen werden (die Manipulation freigebende Position).

Figur 3 zeigt eine Gestaltung der Schutzhülse 2, bei der diese an der Klemmmutter 3 (Klemmglied) des Werkzeugs einrasten kann. Hierbei ist die Außenseite der Klemmmutter wie links in der Figur gezeigt mit zwei gegenüberliegenden Abflachungen 3a versehen, und die so gebildete Schlüsselweite der Klemmmutter 3 ist auch in der distalen Öffnung der Endwand der Schutzhülse entsprechend ausgebildet. Auf diese Weise kann die Schutzhülse als Schlüssel verwendet werden, mithilfe dessen sich die Klemmmutter 3, und somit die Kapillare 1, vom Kapillarenhalter 4 abschrauben lässt. Dabei bleibt die Kapillare stets von der Schutzhülse abgedeckt und geschützt.

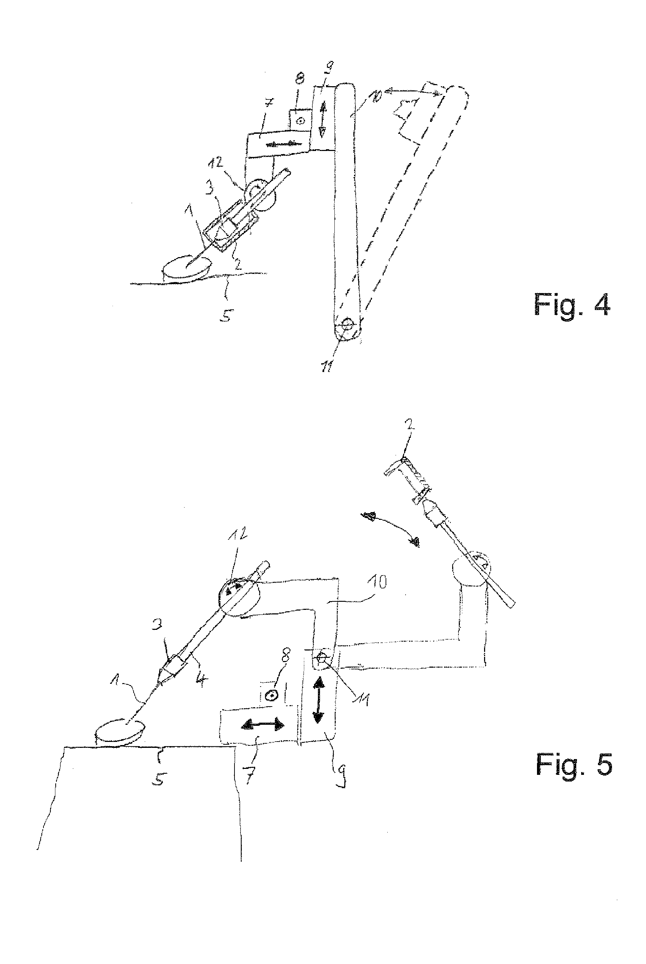

In Figur 4 ist eine Ausführungsform des erfindungsgemäßen Manipulationssystems gezeigt, bei dem das Manipulationswerkzeug in einer flachen Bogenbewegung über der Arbeitsebene von der Probe entfernt werden kann. Die bereits beschriebene Kapillare 1 wird dabei von einer Schutzhülse 2, wie sie zum Beispiel in Figur 2 dargestellt wurde, umgeben, die auf dem Werkzeughalter 4 verschiebbar angeordnet ist. Der Werkzeughalter 4 selbst ist über eine Werkzeugachse 12 in einer vertikalen Ebene senkrecht zur Arbeitsebene 5 drehbar an einer dreiachsigen Verstelleinrichtung angebracht, mithilfe derer die Kapillare entlang der X-Achse 7 und der Y-Achse 8 parallel zur Arbeitsebene 5 sowie in der vertikalen Z-Richtung 9 bewegt werden kann. Die genannte Anordnung ist an einem Ende eines Schwenkarms 10 befestigt, der an seinem anderen Ende über eine horizontale Rotationsachse 11 schwenkbar gelagert ist. Zur Entfernung der Kapillare 1 von der Probe, das heißt aus der Arbeitsebene 5, wird der Schwenkarm 10 um die Rotationsachse 11 verschwenkt. Die Rotationsachse 11 befindet sich dabei geeigneter Weise in einem derartigen Abstand unterhalb der Arbeitsebene 5, dass das entgegengesetzte Ende des Schwenkarms, an dem die Verstelleinrichtung 7, 8, 9 und die Kapillare 1 mit Klemmmutter 3 und Halterung 4 befestigt ist, in einem möglichst flachen Bogen vom Arbeitsbereich in der Ebene 5 wegbewegt wird. Mit anderen Worten durchläuft das der Rotationsachse 11 entgegen gesetzte Ende des Schwenkarms 10 lediglich den oberen Teil des Kreises, der von dem genannten Ende bei einer vollständigen Rotation um die Rotationsachse 11 beschrieben wird. Die Werkzeughalterung 4 kann dabei entweder relativ zum Schwenkarm 10 fixiert bleiben, oder aber geeignet mit der Verschwenkung um die Achse 11 synchronisiert werden. Im ersten Fall werden also weder die Verstelleinrichtung 7, 8, 9 betätigt, noch eine Drehung um die Werkzeugachse 12 durchgeführt, so dass bei Zurückschwenken des Schwenkarms 10 die Kapillare 1 sich wieder in exakt derselben Position in Bezug zur Probe befindet. Ein aufwendiges Einmessen bzw. Nachjustieren entfällt somit. Wird beim Verschwenken des Schwenkarms 10 die Werkzeughalterung 4 um die Achse 12 gedreht, kann die Kanüle 1 im ausgeschwenkten Zustand (in Figur 4 gestrichelt gezeigt) in eine kopfüber angeordnete Position gebracht werden, in der eine Handhabung der Flüssigkeit in der Kanüle bzw. dem darin angeschlossenen Pumpsystem besonders leicht gehandhabt werden kann.

In Figur 5 ist eine alternative Ausführungsform des Manipulationssystems zur Mikroskopanwendung gezeigt, die sich von der Ausführungsform der Figur 4 darin unterscheidet, dass nun beim Verschwenken lediglich der Schwenkarm rotiert, nicht jedoch die Verstelleinrichtung 7, 8, 9, welche ortsfest bleibt. Im Detail ist die Kapillare 1 mit ihrem Halter 4 wie zuvor drehbar um eine Werkzeugachse 12 gelagert, welche diesmal jedoch horizontal durch ein Ende eines Schwenkarms 10 geht. Am anderen Ende des vorliegend abgewinkelt, in Form eines Winkeleisens, ausgebildeten Schwenkarms 10 ist um eine Rotationsachse 11, die horizontal durch die Verstellvorrichtung 7, 8, 9 führt, schwenkbar gelagert. In der eingeschränkten Position (durchgezogene Linie in Figur 5) ist die Kapillare 1 freigegeben, um auf der Arbeitsebene 5 die biologische Probe zu manipulieren, während sie in der ausgeschwenkten Position (in Figur 5 gestrichelt gezeigt) in eine Schutzvorrichtung 2 eingeführt wird, welche die Kapillare 1 berührungslos vor Beschädigung schützt. Hierzu kann die Schutzvorrichtung 2, beispielsweise eine an einer Unterseite offene Schutzhülse, an der Verstelleinrichtung, welche ortsfest verbleibt, befestigt werden, vorzugsweise in festem Verhältnis zur Rotationsachse 11 (beispielsweise durch Fixierung an der Höhenverstellung 9). In diesem Ausführungsbeispiel befindet sich die Verstellvorrichtung 7, 8, 9 auf dem Mikroskoptisch, wobei die Lage der Rotationsachse 11 auch hier so tief wie möglich, das heißt so nah wie möglich an der Arbeitsebene 5 gewählt ist, damit das Ausschwenken der Kapillare 1 mithilfe des Schwenkarms 10 die Kapillare in einem möglichst flachen Bogen über die Arbeitsfläche aus dem Probenbereich heraus führt. Es ist aber ebenso denkbar, dass sich die Verstellvorrichtung auch unterhalb des Mikroskoptisches befindet.

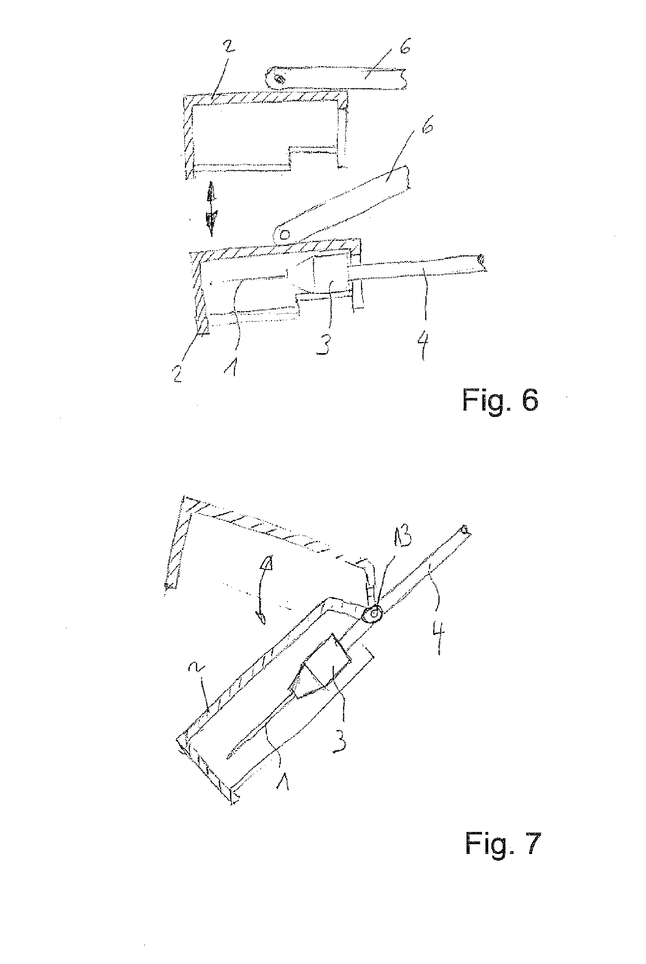

In Figur 6 ist eine weitere Ausgestaltung des erfindungsgemäßen Manipulationssystems gezeigt, in der eine Schutzvorrichtung 2 an einem Tragarm 6 angebracht ist, der unabhängig von der Kapillarenhalterung 4 bewegt wird. Die Schutzvorrichtung 2 ist dabei über eine Achse schwenkbar am Tragarm befestigt, so dass die Schutzvorrichtung 2 korrekt ausgerichtet auf die Kapillare 1 aufgeschwenkt werden kann. Die Schutzvorrichtung 2 ist dabei so geformt, dass sie die Kapillare 1 zusammen mit der Klemmmutter 3 umschließt und vor Beschädigung schützt. Die Schutzhülse 2 kann somit unabhängig von Verstellbewegungen des Werkzeugs 1 bzw. der Werkzeughalterung 4 an das Werkzeug heran- oder weggefahren werden. Beispielsweise kann diese Heran- oder Wegfahrbewegung zeitsynchron oder zeitversetzt mit einer horizontalen Verschwenkung des Schwenkarms 10 (Figur 4 und Figur 5) erfolgen.

In Figur 7 ist schließlich eine weitere mögliche Ausführungsform des erfindungsgemäßen Manipulationssystems gezeigt, bei dem die Schutzvorrichtung 2 einfach über eine Kippachse 13 an der Werkzeughalterung 4 aufklappbar befestigt ist. Diese besonders einfach zu realisierende Konfiguration zeichnet sich insbesondere durch die Geschwindigkeit aus, mit der die Kapillare 1 aus dem die Manipulation erlaubenden Zustand in einen vor Beschädigung geschützten Zustand bewegt werden kann.

## Patentansprüche

1. Manipulationssystem für Mikroskopanwendungen, umfassend ein Mikromanipulationswerkzeug (1) und eine das Werkzeug schützende Schutzvorrichtung (2), wobei das Werkzeug (1) und die Schutzvorrichtung (2) relativ zueinander zwischen einer das Werkzeug kontaktlos schützenden Position und einer das Werkzeug zur Manipulation freigebenden Position bewegbar sind.

2. Manipulationssystem nach Anspruch 1, wobei die Schutzvorrichtung an einem das Werkzeug (1) aufnehmenden Werkzeughalter (4) angebracht ist.

3. Manipulationssystem nach Anspruch 2, wobei das Werkzeug (1) mit einem Klemmglied (3), dessen Durchmesser größer als jener des Werkzeugs ist, am Werkzeughalter (4) fixiert ist und der Innendurchmesser der Schutzvorrichtung (2) im Wesentlichen gleich oder größer als der Durchmesser des Klemmglieds (3) ist.

4. Manipulationssystem nach Anspruch 2, wobei das Werkzeug (1) mit einem Klemmglied (3) am Werkzeughalter (4) fixiert ist und die Schutzvorrichtung (2) am Klemmglied (3) einrastbar ist.

5. Manipulationssystem nach Anspruch 4, wobei die äußere Oberfläche des Klemmglieds (3) mutter-artige Abflachungen (3a) mit einer Schlüsselweite aufweist und ein Bereich der Schutzvorrichtung (2) dieser Schlüsselweite entsprechend ausgebildet ist.

6. Manipulationssystem nach einem der Ansprüche 1 bis 5, wobei die Schutzvorrichtung (2) auf der Längsachse des Werkzeugs (1) kontaktlos über das Werkzeug schiebbar oder stülpbar ist.

7. Manipulationssystem nach Anspruch 6, wobei die Schutzvorrichtung (2) eine in Achsrichtung des Werkzeugs (1) hintere Wandung mit einer Öffnung aufweist, über welche die Schutzvorrichtung auf der Längsachse des Werkzeugs geführt wird.

8. Manipulationssystem nach einem der Ansprüche 1 bis 5, wobei die Schutzvorrichtung eine kontaktlos über das Werkzeug (1) klappbare Schutzhülse (2) ist.

9. Manipulationssystem nach Anspruch 2, 3, 4, 5 oder 8, wobei die Schutzvorrichtung (2) über eine horizontale Kippachse (13) am Werkzeughalter (4) angebracht ist.

10. Manipulationssystem nach Anspruch 2, 3, 4, 5 oder 8, wobei die Schutzvorrichtung (2) an einem Tragarm (6) um eine horizontale Achse drehbar angebracht ist und durch Bewegen des Tragarms über das Werkzeug (2) überstülpbar ist.

11. Manipulationssystem nach einem der vorangehenden Ansprüche, weiter einen um eine horizontale Rotationsachse (11) schwenkbaren Schwenkarm (10) umfassend, an dessen von der Rotationsachse entferntem Ende eine entlang dreier orthogonaler Arbeitsachsen (7, 8, 9) bewegliche Werkzeugverstellung vorgesehen ist, an der das Werkzeug (1) um eine zur Rotationsachse (11) parallele Werkzeugachse (12) schwenkbar angebracht ist.

12. Manipulationssystem nach einem der Ansprüche 1 bis 10, weiter eine entlang dreier orthogonaler Arbeitsachsen (7, 8, 9) bewegliche Werkzeugverstellung umfassend, an deren einem Ende ein Schwenkarm (10) um eine horizontale Rotationsachse (11) schwenkbar gelagert ist, an dessen von der Rotationsachse entferntem Ende das Werkzeug (1) um eine zur Rotationsachse (11) parallele Werkzeugachse (12) schwenkbar angebracht ist.

13. Manipulationssystem nach Anspruch 11 oder 12, wobei die Schutzvorrichtung (2) relativ zur Werkzeugverstellung bzw. zur Rotationsachse (11) des Schwenkarms ortsfest angeordnet ist.

14. Manipulationssystem nach einem der Ansprüche 11 oder 13, wobei die Werkzeugverstellung mit den Arbeitsachsen (7, 8, 9) hängend angeordnet ist.

15. Manipulationssystem nach einem der vorangehenden Ansprüche, wobei die Schutzvorrichtung (2) mithilfe eines mechanischen, eines hydraulischen oder pneumatischen Antriebs bewegbar ist.
